# EUROPÄISCHE PATENTSCHRIFT

(11) **EP 1 593 881 B1**
(45) Veröffentlichungstag und Bekanntmachung des Hinweises auf die Patenterteilung: **27.08.2008**
(21) Anmeldenummer: 05011913.0
(22) Anmeldetag: 22.04.2004
(51) Int. Cl.: F16H 57/04, F16D 25/12, F16H 61/688

(54) **Doppelkupplungsgetriebe mit einer Kühlflüssigkeitsversorgungseinrichtung sowie ein Verfahren zur Kühlflüssigkeitsversorgung eines Doppelkupplungsgtriebes**
Dual clutch transmission with cooling fluid feeding arrangement and method of feeding cooling fluid for such a transmission
Transmission à double embrayages avec dispositif d'alimentation en liquide de refroidissement et procédé d'alimentation en fluide de refroidissement d'une telle transmission

(43) Veröffentlichungstag der Anmeldung: 09.11.2005
(62) Teilanmeldung aus: 04009492.2
(73) Patentinhaber: BorgWarner Inc., Auburn Hills, MI 48326-2872 (US)
(72) Erfinder: Ebinger, Günter, Dr., 76684 Oestringen (DE)
(74) Vertreter: Patentanwälte Westphal, Mussgnug & Partner

(56) Entgegenhaltungen:
- DE-A- 10 155 050
- GB-A- 2 108 584
- US-A1- 2002 002 878
- US-A1- 2003 066 710
- US-B1- 6 715 597

## Beschreibung

Doppelkupplungsgetriebe für Kraftfahrzeuge mit einer hydraulischen Steuereinrichtung sowie eine Verfahren zum hydraulischen Ansteuern eines Doppelkupplungsgetriebes für Kraftfahrzeuge.

Doppelkupplungsgetriebe in Personenkraftwagen sind seit den 70er Jahren bekannt. So hat beispielsweise die Firma Porsche ein Parallelschaltgetriebe (PSG) entwickelt, welches unter der Bezeichnung PDK (Porsche Doppelkupplung) bekannt wurde.

Im Jahr 2003 ist die Firma Volkswagen mit einem neuartigen Doppelkupplungsgetriebe in Produktion gegangen, welches nunmehr unter der Kurzbezeichnung DSG (Direktschaltgetriebe) auf dem Markt ist.

In diesem Getriebe erfolgt die Betätigung der Kupplungen und Gänge durch hydraulische Aktuatoren. All diese hydraulischen Funktionen sind in einer zentralen Steuerungseinheit untergebracht.

Zur Druckversorgung der Aktuatoren wird ein sogenannter Hauptdruck (Hydraulikflüssigkeitshauptdruck) eingestellt. Hierzu dient ein Hauptdruckregelventil, das von einem elektromagnetischen Proportionalventil angesteuert wird.

Im weiteren Verlauf des Hydraulikflüssigkeitspfades zu den Aktuatoren teilt sich dieser in je eine Getriebehälfte auf, nämlich in einen Pfad zu den Aktuatoren der ungeraden Gänge und der dazugehörigen Kupplung und in einen Pfad zu den geraden Gängen und die dazugehörende Kupplung. Für jeden dieser Pfade ist ein Druckminderventil vorgesehen, das den Hauptdruck mindern kann. Diese Druckminderventile haben darüber hinaus auch Sicherheitsfunktion zu erfüllen, da sie den gesamten Pfad (gerade oder ungerade Gänge) drucklos schalten können.

Zur Kühlung des Getriebes ist ein Getriebekühler vorgesehen, der mit einem Kühlflüssigkeitsstrom versorgt wird, der dem Kupplungskühlflüssigkeitsstrom parallel geschaltet ist.

Aus der gattungsbildenden DE 101 55 050 A1 ist ein Kupplungssystem in Form einer Doppelkupplung bekannt, bei dem das Kühlöl über einen Wärmetauscher zugeführt wird. Hierbei kann Schmutz in den Hydraulikkreislauf gelangen.

Obwohl sich eine hydraulische Steuereinrichtung für ein Doppelkupplungsgetriebe der vorstehend beschriebenen Art dem Grunde nach bewährt hat, besteht weiterer Verbesserungsbedarf.

Die Aufgabe der Erfindung besteht darin, zu verhindern, dass die Anfangsverschmutzung des Getriebeflüssigkeitskühlers in den Hydraulikflüssigkeitskreislauf gelangt.

Die vorstehend angegebene Aufgabe wird durch ein Doppelkupplungsgetriebe für Kraftfahrzeuge mit einer hydraulischen Steuereinrichtung für ein Doppelkupplungsgetriebe gemäß dem Patentanspruch 1 sowie ein Verfahren zum hydraulischen Ansteuern eines Doppelkupplungsgetriebes nach dem Patentanspruch 4 gelöst.

Vorteilhafte Ausführungen und Weiterbildungen der Erfindung sind in den entsprechenden Unteransprüchen angegeben.

Unabhängig vom konkreten Aufbau der hydraulischen Steuereinrichtung für die Kupplungen und Gangaktuatoren kann die hydraulische Steuereinrichtung für ein Doppelkupplungsgetriebe mit einem Getriebeflüssigkeitskühler und einer Kupplungskühlflüssigkeitsversorgung dadurch sehr einfach gestaltet werden, in dem die Kupplungskühlflüssigkeitsversorgung von dem Getriebeflüssigkeitskühler mit Kühlflüssigkeit (Kühlöl) gespeist wird.

Am einfachsten lässt sich dies bei einer hydraulischen Steuereinrichtung für ein Doppelkupplungsgetriebe dadurch realisieren, dass der Getriebeflüssigkeitskühler und die Kupplungskühlflüssigkeitsversorgung in Reihe geschaltet sind. Damit versorgt man die Doppelkupplung mit Kühlflüssigkeit (Kühlöl) mit sehr niedriger Temperatur. Darüber hinaus kann der Pumpenförderstrom einer zur Flüssigkeitsversorgung vorgesehenen Hydropumpe gegenüber einer parallelen Anordnung minimiert werden.

Erfindungsgemäß ist vorgesehen, dass die von dem Getriebeflüssigkeitskühler kommende Kühlflüssigkeit (Kühlöl) gefiltert wird. Es wird daher stromab des Getriebeflüssigkeitskühlers ein Druckfilter vorgesehen. Die Kühlflüssigkeit (Kühlöl) wird dann in einer Art Nebenstromfilterung gereinigt. Die Anfangsverschmutzung des Getriebeflüssigkeitskühlers gelangt damit nicht in den Hydraulikkreislauf.

In weiterer Ausgestaltung der Erfindung ist vorgesehen, die Kühlflüssigkeit (Kühlöl) wenigstens teilweise ungefiltert der Kupplungskühlflüssigkeitsversorgung zuzuführen, wenn die gefilterte Flüssigkeitsmenge nicht ausreichend ist. Bei einer hydraulischen Steuereinrichtung für ein Doppelkupplungsgetriebe wird dies am einfachsten dadurch realisiert, dass parallel zu dem Druckfilter ein Rückschlagventil eingebaut wird, welches bei Überdruck, d. h. z. B. bei verstopftem Druckfilter, parallel zum Druckfilter Kühlflüssigkeit (Kühlöl) durchlässt.

Weiter ist erfindungsgemäß vorgesehen, dass der Kühlflüssigkeitsdruck der durch den Getriebeflüssigkeitskühler fließenden Kühlflüssigkeit unabhängig von einem zuführenden Hydraulikflüssigkeitssystem geregelt wird. Bei einer hydraulischen Steuereinrichtung der erfindungsgemäßen Art ist demnach stromab des Getriebeflüssigkeitskühlers vorteilhafterweise ein Druckbegrenzungsventil vorgesehen. Dieses Druckbegrenzungsventil sorgt für konstante Druckverhältnisse im Kühlerkreislauf, so dass die Kühlflüssigkeit (Kühlöl) keine Störungen durch wechselnden Systemdruck aufweist.

Die Erfindung wird nunmehr anhand der Zeichnungen näher beschrieben. Es zeigt:

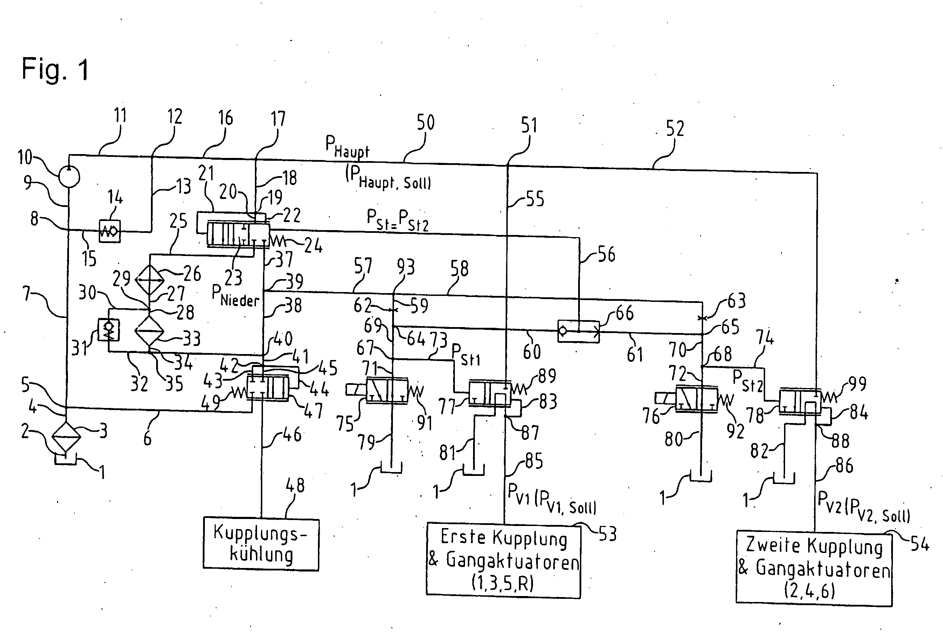

- Figur 1: ein Ausführungsbeispiel einer erfindungsgemäßen hydraulischen Steuereinrichtung für ein Doppelkupplungsgetriebe.

Die in der Figur 1 dargestellte hydraulische Steuereinrichtung für ein Doppelkupplungsgetriebe umfasst als Hauptkomponenten eine Hydropumpe 10 zur Bereitstellung einer Hydraulikflüssigkeitsversorgung, ein Hauptdruckregelventil 23 zum Regeln und Einstellen eines Hydraulikflüssigkeitshauptdrucks p_{Haupt} der von der Hydropumpe 10 bereitgestellten Hydraulikflüssigkeit in einer Hauptdruckleitung, ein erstes Druckregelventil 77 zum Einstellen eines ersten Versorgungsdrucks p_{V1} in einer ersten Versorgungsleitung für die erste Kupplung 53 des Doppelkupplungsgetriebes und für die zugehörigen Aktuatoren der ungeraden Gänge (1, 3, 5) und des Rückwärtsgangs (R) sowie ein zweites Druckregelventil 78 zum Einstellen eines zweiten Versorgungsdrucks p_{V2} in einer zweiten Versorgungsleitung für die zweite Kupplung 54 des Doppelkupplungsgetriebes und die zugehörigen Gangaktuatoren der geraden Gänge (2, 4 und 6). Weiterhin ist ein Getriebeflüssigkeitskühler 26 an sich bekannter Art sowie eine Kupplungsflüssigkeitsversorgung 48 vorgesehen, welche die zur Kühlung der Kupplungen 53, 54 der Doppelkupplung vorgesehene Kühlflüssigkeit (Kühlöl) bereitstellt.

Die Einzelkomponenten der erfindungsgemäßen hydraulischen Steuereinrichtung sind in der nachfolgend beschriebenen Weise miteinander verbunden:

Von einem offenen Hydraulikflüssigkeitsbehälter 1 wird Hydraulikflüssigkeit bereitgestellt. Eine Durchflussleitung 2, dessen Rohrende unterhalb des Hydraulikflüssigkeitsspiegels im Hydraulikflüssigkeitsbehälter 1 liegt, ist mit einem Filter 3 verbunden. Von dort führt eine Durchflussleitung 4, 7, 9 zur Hydropumpe 10. Am Ausgang der Hydropumpe 10 schließt sich eine Hauptdruckleitung an, welche durch die Durchflussleitungen 11, 17, 18, 50, 55, 52 gebildet ist. Parallel zur Hydropumpe 10 ist ein Druckbegrenzer (Rückschlagventil) 14 vorgesehen, welches den Hauptdruck p_{Haupt} auf einen Maximalwert begrenzt. Die zugehörigen Durchflussleitungen sind mit den Bezugszeichen 13 und 15 gekennzeichnet, die Leitungsverbindungen mit den Bezugszeichen 8 und 12.

Das Hauptdruckregelventil 23 ist im vorliegenden Ausführungsbeispiel als 4/3-Wege-Druckbegrenzungsventil ausgeführt. Andere Ausführungsvarianten sind jedoch denkbar.

Der Sollwert für den Hauptdruck p_{Haupt,Soll} wird durch einen Druck p_{St} an einem Steuereingang des Hauptdruckregelventils 23 und die Federkraft einer Rückstellfeder 24 vorgegeben. Die Regelstrecke wird durch die Leitung 21 gebildet.

Beide Eingänge des Hauptdruckregelventils 23 sind über die Durchflussleitungen 20 und 22 über eine Leitungsverbindung 19 mit der Hauptdruckleitung 11, 16, 18, 50, 55, 52 verbunden.

Die Hauptdruckleitung 11, 16, 18, 50, 55, 52 umfasst zwei Pfade, welche zu den Versorgungsleitungen der Kupplungen und Gangaktuatoren 53, 54 führen. Diese Pfade sind in der Figur 1 mit den Bezugszeichen 52 und 55 gekennzeichnet.

Die mittels dieser Druckregelventile 77, 78 in den Versorgungsleitungen beiden Druckregelventile 77, 78 sind im vorliegenden Ausführungsbeispiel als 3/2-Wege-Ventile ausgebildet.

Die einzustellenden Sollwerte p_{V1,Soll}, p_{V2,Soll} werden über die am jeweiligen Steuereingang anliegenden Vorsteuerdrücke p_{St1}, p_{St2} und die Federkraft der jeweiligen Rückstellfedern 89, 99 vorgegeben. Die jeweiligen Regelstrecken werden durch die Leitungen 83 und 84 gebildet.

Der Eingang des ersten Druckregelventils 77 ist über die Durchflussleitung 55 an der Leitungsverbindung 51 mit der Hauptdruckleitung 11, 16, 18, 50, 55, 52 verbunden. In entsprechender Weise ist der Eingang des zweiten Druckregelventils 78 über die an der Leitungsverbindung 51 angeschlossene Durchflussleitung 52 mit der Hauptdruckleitung 11, 16, 18, 50, 55 verbunden.

Jeweils einer der beiden Ausgänge der beiden Druckregelventile 77, 78 ist über eine entsprechende Durchflussleitung 81, 82 mit dem offenen Hydraulikflüssigkeitsbehälter 1 verbunden. Jeweils der andere der beiden Ausgänge ist mit der jeweiligen Versorgungsleitung 85, 86 der beiden Kupplungen und zugehörigen Gangaktuatoren 53, 54 verbunden.

Den beiden Druckregelventilen 77, 78 ist jeweils ein Vorsteuerventil 75, 76 zugeordnet, welche jeweils die Vorsteuerdrücke p_{St1}, p_{St2} ausgeben, welche (zusammen mit der jeweiligen Federkraft der Rückstellfedern 89, 99) die Sollwerte p_{V1,Soll}, p_{V2,Soll} für die in den Versorgungsleitungen 85, 86 einzustellenden Versorgungsdrücke p_{V1}, p_{V2} vorgeben.

Die beiden Vorsteuerventile 75, 76 sind im vorliegenden Ausführungsbeispiel als 2/2-Wege-Ventile ausgebildet. Es handelt sich dabei um Magnetventile, welche entgegen der Rückstellkraft entsprechender Rückstellfedern 91, 92 betätigt werden.

Die von diesen beiden Vorsteuerventilen 75, 76 geregelten Vorsteuerdrücke p_{St1}, p_{St2} für die Druckregelventile 77, 78 werden im vorliegenden Ausführungsbeispiel von einer Niederdruckleitung 37, 38, 41, 57, 58, 59 bereitgestellt, in welcher ein von der Hauptdruckleitung unabhängiger Niederdruck p_{Nieder} herrscht. Zu diesem Zweck sind die jeweiligen Eingänge der Vorsteuerventile 75, 76 über entsprechende viskositätsstabile Drosselungen 62, 63 mit dieser Niederdruckleitung 37, 38, 41, 57, 58 verbunden (Leitungsverbindung 93, Durchflussleitungen 69, 71, 70, 72). Diese Durchflussleitungen 69, 71 bzw. 70, 72 sind wiederum mit Steuereingängen der jeweiligen Druckregelventile 76, 77 über die Steuerleitungen 73 bzw. 74 verbunden (Leitungsverbindung 67, 68).

Die jeweilige Einstellung eines Vorsteuerdrucks p_{St1}, p_{St2} wird dadurch ermöglicht, dass die Vorsteuerventile 75, 76 ausgangsseitig über Durchflussleitungen 79, 80 mit dem offenen Hydraulikflüssigkeitsbehälter 1 verbunden sind, über welche der jeweilige Vorsteuerdruck pₛₜ₁, p_{St2} abregelbar ist.

Die erste Niederdruckleitung 37, 38, 41 ist mit einem der Ausgänge des Hauptdruckregelventils 23 verbunden. Über diesen Ausgang des Hauptdruckregelventils 23 wird diese Niederdruckleitung 37, 38, 41 gespeist.

Zum Einstellen des Druckniveaus p_{Nieder} im ersten Niederdruckkreis 37, 38, 41 ist ein Druckregelventil/Druckbegrenzungsventil 47 vorgesehen. Dieses Druckbegrenzungsventil 47 ist im vorliegenden Ausführungsbeispiel als 4/2-Wege-Ventil ausgeführt.

Der einzustellende Sollwert des Niederdrucks p_{Nieder,Soll} wird durch die Federkraft einer Rückstellfeder 49 vorgegeben. Die Regelstrecke wird durch die Leitung 44 gebildet, welche auf einen Steuereingang des Druckbegrenzungsventils 47 geführt ist.

Die beiden Eingänge des 4/2-Wege-Ventils sind über entsprechende Durchflussleitungen 43, 45 mit dem der ersten Nieder-druckleitung 37, 38, 41 am Knoten 42 verbunden.

Einer der Ausgänge des 4/2-Wege-Ventils 47 ist über eine Durchflussleitung 6 an einer Leitungsverbindung 5 mit der zum Filter 3 bzw. zur Hydropumpe 10 führenden Durchflussleitung 4, 7, 9 verbunden.

Das Druckbegrenzungs-/Druckregelventil 47 sorgt für konstante Druckverhältnisse in der ersten Niederdruckleitung 37, 38, 41, 57, 58. Auf diese Weise wird verhindert, dass die geregelten Vorsteuerdrücke p_{St1}, p_{St2} für die beiden Druckregelventile 77, 78 Störungen durch einen wechselnden Hauptdruck p_{Haupt} unterworfen sind.

Die beiden Druckregelventile 77, 78 sind unabhängig voneinander regelbar. Darüber hinaus sind beide Druckregelventile 77, 78 derart ausgebildet, dass sie die jeweiligen korrespondierenden Versorgungsleitungen 85, 86 drucklos schalten können. Zu diesem Zweck ist im vorliegenden Ausführungsbeispiel der jeweilige zweite Ausgang der als 3/2-Wege-Ventile ausgebildeten Druckregelventile 77, 78 über entsprechende Durchflussleitungen 81, 82 mit dem offenen Behälter 1 verbunden. In den in der Figur 1 dargestellten Ventilstellungen werden die entsprechenden Versorgungsleitungen 85, 86 drucklos geschaltet, indem eine Verbindung über die jeweiligen Ausgänge der entsprechenden Druckregelventile 77, 78 zwischen den Durchflussleitungen 81 und 85 bzw. 82 und 86 hergestellt wird. Diese ermöglicht einen Abfluss der in den jeweiligen Versorgungsleitungen 85, 86 vorhandenen Hydraulikflüssigkeit in den offenen Hydraulikflüssigkeitsbehälter 1.

Im vorliegenden Ausführungsbeispiel sind die beiden Vorsteuerdruckleitungen 69, 71, 73 bzw. 70, 72, 74 über entsprechende Leitungen 60, 61 und Leitungsverbindungen 64, 65 mit den beiden Eingängen eines Wechselventils 66 verbunden. Der Ausgang des Wechselventils 66 ist über eine Steuerleitung 56 mit dem vorstehend erwähnten Steuereingang für den Druck p_{St} des Hauptdruckregelventils 23 verbunden.

Je nachdem, welcher Vorsteuerdruck p_{St1} oder p_{St2} größer ist, wird über das Wechselventil 66 eine Verbindung von der Vorsteuerleitung 69, 71, 73, 60 bzw. 70, 72, 74, 61 der beiden Druckregelventile 77, 78 über das Wechselventil 66 zur Steuerleitung 56 und damit zum vorerwähnten Steuereingang des Hauptdruckregelventils 23 hergestellt. Auf diese Weise wird der Sollwert des Hydraulikflüssigkeitshauptdrucks p_{Haupt,Soll} von dem größeren der beiden Vorsteuerdrücke p_{St1}, p_{St2} vorgegeben.

In dem in der Figur 1 dargestellten Fall ist der Vorsteuerdruck p_{St2} des zweiten Druckregelventils 78 größer als der Vorsteuerdruck p_{St1} des ersten Druckregelventils 77. Der Vorsteuerdruck p_{St2} des zweiten Druckregelventils 78 wird daher zum Vorsteuerdruck p_{St} des Hauptdruckregelventils 23, auf Grund dessen die Höhe des einzustellenden Hydraulikflüssigkeitshauptdrucks p_{Haupt,Soll} vorgegeben ist.

Beim Ausführungsbeispiel gemäß der Figur 1 ist eine zweite Niederdruckleitung 25, 27, 28, 34, 36 vorgesehen, welche parallel zur ersten Niederdruckleitung 37, 38 über die Leitungsverbindung geschaltet ist. Diese zweite Niederdruckleitung 25, 27, 28, 34 ist mit dem zweiten Ausgang des Hauptdruckregelventils 23 verbunden. In diesen zweiten Niederdruckkreis 25, 27, 34, 36 ist ein Getriebeflüssigkeitskühler 26 eingebaut. Diesem Getriebeflüssigkeitskühler 26 ist ein Druckfilter 33 nachgeschaltet.

Um zu verhindern, dass bei verstopftem Druckfilter 33 kein Durchfluss durch den Getriebeflüssigkeitskühler 26 mehr möglich ist, ist dem Druckfilter 33 ein Überdruckventil 31 über die Anschlüsse 32, 30, 29, 35 parallel geschaltet.

Am zweiten Ausgang des Druckbegrenzungsventils 47 ist über eine Durchflussleitung 46 eine Kupplungskühlflüssigkeitsversorgung 48 angeschlossen. Auf diese Weise sind Getriebeflüssigkeitskühler 26 und Kupplungskühlflüssigkeitsversorgung 48 in Reihe geschaltet. Dadurch wird die Doppelkupplung mit Kühlflüssigkeit (Kühlöl) versorgt, welches eine vergleichsweise niedrige Temperatur aufweist. Darüber hinaus kann der Pumpenförderstrom der Hydropumpe 10 gegenüber einer parallelen Anordnung minimiert werden. Der Druckfilter 33, welcher sich stromab des Getriebeflüssigkeitskühlers 26 befindet, reinigt die Kühlflüssigkeit (Kühlöl) in einer Art Nebenstromfilterung und verhindert, dass die Anfangsverschmutzung des Getriebeflüssigkeitskühlers 26 in den Hydraulikkreislauf gelangt.

### Bezugszeichenliste

- 1: offener Hydraulikflüssigkeitsbehälter
- 2: Rohrende unterhalb Hydraulikflüssigkeitsspiegel
- 3: Filter
- 4: Durchflussleitung
- 5: Leitungsverbindung
- 6: Durchflussleitung
- 7: Durchflussleitung
- 8: Leitungsverbindung
- 9: Durchflussleitung
- 10: Hydropumpe
- 11: Durchflussleitung
- 12: Leitungsverbindung
- 13: Durchflussleitung
- 14: Druckbegrenzer (Rückschlagventil)
- 15: Durchflussleitung
- 16: Durchflussleitung
- 17: Leitungsverbindung
- 18: Durchflussleitung
- 19: Leitungsverbindung
- 20: Durchflussleitung
- 21: Steuerleitung
- 22: Steuerleitung
- 23: Hauptdruckregelventil (4/3-Wege-Druckbegrenzungsventil)
- 24: Rückholfeder
- 25: Durchflussleitung
- 26: Getriebeflüssigkeitskühler
- 27: Durchflussleitung
- 28: Durchflussleitung
- 29: Leitungsverbindung
- 30: Durchflussleitung
- 31: Überdruckventil
- 32: Durchflussleitung
- 33: Druckfilter
- 34: Durchflussleitung
- 35: Leitungsverbindung
- 36: Durchflussleitung
- 37: Bypassdurchflussleitung
- 38: Bypassdurchflussleitung
- 39: Leitungsverbindung
- 40: Leitungsverbindung
- 41: Durchflussleitung
- 42: Leitungsverbindung
- 43: Durchflussleitung
- 44: Steuerleitung
- 45: Durchflussleitung
- 46: Durchflussleitung
- 47: Druckbegrenzungs-/Regelventil (4/2-Wege-Ventil)
- 48: Kupplungskühlflüssigkeitsversorgungssystem
- 49: Rückholfeder
- 50: Durchflussleitung
- 51: Leitungsverbindung
- 52: Durchflussleitung
- 53: Kupplung und Gangsteller einer ersten Getriebeeingangswelle
- 54: Kupplung und Gangsteller einer zweiten Getriebeeingangswelle
- 55: Durchflussleitung
- 56: Steuerleitung
- 57: Steuerleitung
- 58: Steuerleitung
- 59: Steuerleitung
- 60: Steuerleitung
- 61: Steuerleitung
- 62: viskositätsstabile Drosselung
- 63: viskositätsstabile Drosselung
- 64: Leitungsverbindung
- 65: Leitungsverbindung
- 66: Wechselventil
- 67: Leitungsverbindung
- 68: Leitungsverbindung
- 69: Steuerleitung
- 70: Steuerleitung
- 71: Steuerleitung
- 72: Steuerleitung
- 73: Steuerleitung
- 74: Steuerleitung
- 75: erstes Vorsteuerventil (durch Elektromagneten gegen eine Rückholfeder betätigtes 2/2-Wege-Ventil)
- 76: zweites Vorsteuerventil (durch Elektromagneten gegen eine Rückholfeder betätigtes 2/2-Wege-Ventil)
- 77: erstes Druckregelventil (druckbetätigtes 3/2-Wege-Ventil)
- 78: zweites Druckregelventil (druckbetätigtes 3/2-Wege-Ventil)
- 79: Durchflussleitung
- 80: Durchflussleitung
- 81: Durchflussleitung
- 82: Durchflussleitung
- 83: Steuerleitung
- 84: Steuerleitung
- 85: Durchflussleitung
- 86: Durchflussleitung
- 87: Leitungsverbindung
- 88: Leitungsverbindung
- 89: Rückholfeder
- 90: Rückholfeder
- 91: Rückholfeder
- 92: Rückholfeder
- 93: Leitungsverbindung

- p_{Haupt}: Hauptdruck
- p_{Haupt,Soll}: Sollwert des Hauptdrucks
- p_{Nieder}: Niederdruck
- p_{Nieder,Soll}: Sollwert des Niederdrucks
- p_{V1}: erster Versorgungsdruck
- p_{V1,Soll}: Sollwert des ersten Versorgungsdrucks
- p_{V2}: zweiter Versorgungsdruck
- p_{V2,Soll}: Sollwert des zweiten Versorgungsdrucks
- p_{St}: Vorsteuerdruck des Hauptdruckregelventils 23
- p_{St1}: Vorsteuerdruck des ersten Druckregelventils 77
- p_{St2}: Vorsteuerdruck des zweiten Druckregelventils 78

## Patentansprüche

1. Doppelkupplungs getriebe für Kraftfahrzeuge mit einer hydraulischen Steuereinrichtung wobei die Steuereinrichtung eine Getriebeflüssigkeitskühler (26) und eine Kupplungskühlflüssigkeitsversorgung (48) aufweist, und der Getriebeflüssigkeitskühler (26) und die Kupplungskühlflüssigkeitsversorgung (48) in Reihe geschaltet sind,
**dadurch gekennzeichnet, dass** stromab des Getriebeflüssigkeitskühlers (26) ein Druckfilter (33) vorgesehen ist.

2. Doppelkupplungsgetriebe nach Anspruch 1,
**dadurch gekennzeichnet, dass** parallel zu dem Druckfilter (33) ein Rückschlagventil (31) vorgesehen ist.

3. Doppelkupplungsgetriebe nach einem der Ansprüche 1 oder 2,
**dadurch gekennzeichnet, dass** stromab des Getriebeflüssigkeitskühlers (26) ein Druckbegrenzungsventil (47) vorgesehen ist.

4. Verfahren zum hydraulischen Ansteuern eines Doppelkupplungsgetriebes für Kraftfahrzeuge, bei dem das Getriebe mittels eines Getriebeflüssigkeitskühlers (26) gekühlt wird und bei dem eine Kupplungskühlflüssigkeitsversorgung (48) vorgesehen ist, wobei die Kupplungskühlflüssigkeitsversorgung (48) von dem Getriebeflüssigkeitskühler (26) mit Kühlflüssigkeit gespeist wird,
**dadurch gekennzeichnet, dass** die von dem Getriebeflüssigkeitskühler (26) kommende Kühlflüssigkeit in einem Druckfilter (33) gefiltert wird.

5. Verfahren nach Anspruch 4,
**dadurch gekennzeichnet, dass** bei verstopftem Druckfilter (33) Kühlflüssigkeit parallel an dem Druckfilter (33) vorbeigeleitet wird.

6. Verfahren nach einem der Ansprüche 4 oder 5,
**dadurch gekennzeichnet, dass** der Kühlflüssigkeitsdruck (p_{Nieder}) der durch den Getriebeflüssigkeitskühler (26) fließenden Kühlflüssigkeit unabhängig von einem zuführenden Hydraulikflüssigkeitssystem (11, 16, 18, 50, 55, 52) geregelt wird.

## Claims

1. Dual-clutch transmission for motor vehicles having a hydraulic control device, with the control device having a transmission fluid cooler (26) and a clutch cooling fluid supply (48), and with the transmission fluid cooler (26) and the clutch cooling fluid supply (48) being connected in series, **characterized in that** a pressure filter (33) is provided downstream of the transmission fluid cooler (26).

2. Dual-clutch transmission according to Claim 1,
**characterized in that** a non-return valve (31) is provided parallel to the pressure filter (33).

3. Dual-clutch transmission according to one of Claims 1 or 2,
**characterized in that** a pressure limiting valve (47) is provided downstream of the transmission fluid cooler (26).

4. Method for the hydraulic activation of a dual-clutch transmission for motor vehicles, in which the transmission is cooled by means of a transmission fluid cooler (26) and in which a clutch cooling fluid supply (48) is provided, with the clutch cooling fluid supply (48) being fed with cooling fluid from the transmission fluid cooler (26),
**characterized in that** the cooling fluid passing from the transmission fluid cooler (26) is filtered in a filter (33).

5. Method according to Claim 4,
**characterized in that**, in the event of the filter (33) becoming blocked, the cooling fluid is conducted in parallel past the filter (33).

6. Method according to one of Claims 4 or 5,
**characterized in that** the cooling fluid pressure (p_{Nieder}) of the cooling fluid flowing through the transmission fluid cooler (26) is controlled independently of a hydraulic fluid system (11, 16, 18, 50, 55, 52) to be supplied.

## Revendications

1. Boîte de vitesses à double accouplement pour véhicules automobiles comprenant un dispositif de commande hydraulique, le dispositif de commande présentant un radiateur à liquide de boîte de vitesses (26) et une alimentation en liquide de refroidissement d'accouplement (48) et le radiateur à liquide de boîte de vitesses (26) et l'alimentation en liquide de refroidissement d'accouplement (48) étant branchés en série, **caractérisée en ce qu'**un filtre sous pression (33) est prévu en aval du radiateur à liquide de boîte de vitesses (26).

2. Boîte de vitesses à double accouplement selon la revendication 1, **caractérisée en ce qu'**un clapet anti-retour (31) est prévu parallèlement avec le filtre sous pression (33).

3. Boîte de vitesses à double accouplement selon l'une des revendications 1 ou 2, **caractérisée en ce qu'**un limiteur de pression (47) est prévu en aval du radiateur à liquide de boîte de vitesses (26).

4. Procédé de commande hydraulique d'une boîte de vitesses à double accouplement pour véhicules automobiles avec lequel la boîte de vitesses est refroidie au moyen d'un radiateur à liquide de boîte de vitesses (26) et avec lequel est prévue une alimentation en liquide de refroidissement d'accouplement (48), l'alimentation en liquide de refroidissement d'accouplement (48) étant alimentée en liquide de refroidissement par le radiateur à liquide de boîte de vitesses (26), **caractérisé en ce que** le liquide de refroidissement en provenance du radiateur à liquide de boîte de vitesses (26) est filtré dans un filtre (33).

5. Procédé selon la revendication 4, **caractérisé en ce que** lorsque le filtre (33) est bouché, le liquide de refroidissement est acheminé parallèlement au filtre (33).

6. Procédé selon la revendication 4 ou 5, **caractérisé en ce que** la pression de liquide de refroidissement (p_{Nieder}) du liquide de refroidissement qui circule à travers le radiateur à liquide de boîte de vitesses (26) est régulée indépendamment d'un système à liquide hydraulique (11, 16, 18, 50, 55, 52) d'approvisionnement.
